# EUROPÄISCHE PATENTSCHRIFT

(11) **EP 3 552 521 B1**
(45) Veröffentlichungstag und Bekanntmachung des Hinweises auf die Patenterteilung: **08.09.2021**
(21) Anmeldenummer: 19168641.9
(22) Anmeldetag: 11.04.2019
(51) Int. Cl.: A47C 20/04, A47C 31/00

(54) **MÖBELANTRIEB UND MÖBEL MIT EINEM SOLCHEN MÖBELANTRIEB**
DRIVE DEVICE FOR FURNITURE AND FURNITURE WITH SUCH A DRIVE DEVICE
ENTRAINEMENT DE MEUBLE ET MEUBLE DOTÉ D'UN TEL ENTRAINEMENT DE MEUBLE

(30) Priorität: 13.04.2018 DE 102018108870
(43) Veröffentlichungstag der Anmeldung: 16.10.2019
(73) Patentinhaber: DewertOkin Technology Group Co., Ltd., Jiaxing City, Zhejiang Province (CN)
(72) Erfinder: HILLE, Armin, 33659 Bielefeld (DE)
(74) Vertreter: Kleine, Hubertus

(56) Entgegenhaltungen:
- EP-A2- 2 036 524
- DE-U1- 29 816 022
- JP-A- H06 125 942
- US-A1- 2010 302 044
- US-A1- 2015 130 595

## Beschreibung

Die Erfindung betrifft einen Möbelantrieb mit einer Steuereinrichtung und mindestens einem elektromotorischen Verstellantrieb sowie einer mit der Steuereinrichtung über ein Kabel verbundenen Handbedieneinheit zur Betätigung des mindestens einen Verstellantriebs. Die Erfindung betrifft weiterhin ein Möbel mit einem solchen Möbelantrieb.

Derartige Möbelantriebe mit Handsteuerung durch eine kabelgebundene Handbedieneinheit sind vielfältig im Markt vertreten, da sie zuverlässig bedienbar und kostengünstig herstellbar sind. Inzwischen sind alternativ auch Möbelantriebe im Markt erhältlich, die drahtlos über eine spezielle Handbedienung oder über ein Mobilgerät, z.B. ein Smartphone, gesteuert werden können, was sich gegenüber der kabelgebundenen Handsteuerung durch eine bequemere und flexiblere Bedienbarkeit auszeichnet. Auch Sprachsteuerungen sind für Möbelantriebe bekannt. Beispiele aus dem Stand der Technik zeigen: DE 298 16 022 U1, JP H06 125942 A, US 2010/302044 A1 und US 2015/130595 A1. Es ist eine Aufgabe der vorliegenden Erfindung, eine einfach nachrüstbare Möglichkeit zu schaffen, ein Möbel bzw. einen Möbelantrieb der eingangs genannten Art um eine Bedienalternative zu erweitern.

Diese Aufgabe wird gelöst durch einen Möbelantrieb und ein Möbel mit den Merkmalen des jeweiligen unabhängigen Anspruchs. Vorteilhafte Ausgestaltungen und Weiterbildungen sind Gegenstand der jeweiligen abhängigen Ansprüche.

Ein erfindungsgemäßer Möbelantrieb der eingangs genannten Art zeichnet sich dadurch aus, dass ein Adapter an die Steuereinrichtung angeschlossen ist, durch den ein weiterer Übertragungsweg für Bedienkommandos bereitgestellt wird. Beispielsweise kann der Adapter an dem Anschluss für die Handbedieneinheit an der Steuereinrichtung angeschlossen sein.

Der Adapter kann so steuernd auf den Möbelantrieb zugreifen, indem er über den weiteren Übertragungsweg empfangene Bedienkommandos eines Benutzers in entsprechende (Schalt-) Signale umsetzt, die für die Steuereinrichtung von der Handbedieneinheit zu kommen scheinen. Es wird die bereits vorhandene Schnittstelle der Steuereinrichtung zur Handbedieneinheit genutzt. Für die Steuereinrichtung erfolgt das Hinzufügen der Bedienkommandos, die über den weiteren Ubertragungsweg empfangen werden, somit transparent. Durch den Adapter kann somit leicht ein weiterer Übertragungsweg für Bedienkommandos und damit eine weitere Bedienmöglichkeit bei bereits bestehenden Möbelantrieben nachgerüstet werden, ohne den bestehenden Möbelantrieb modifizieren zu müssen.

Erfindungsgemäß ist der Adapter elektrisch zwischen der Steuereinrichtung und der Handbedieneinheit angeordnet. Signale oder Schaltvorgänge der Handbedieneinheit können so durch den Adapter an die Steuereinrichtung weitergeleitet werden, so dass diese Bedienmöglichkeit nach wie vor zur Verfügung steht.

Erfindungsgemäß weist der Adapter dabei einen Stecker zur Verbindung mit der Steuereinrichtung und einen Handbedienanschluss zur Verbindung mit der Handbedieneinheit auf. Die in der Regel vorhandene Steckverbindung zwischen Handsteuerung und Steuereinrichtung kann dann unaufwändig und werkzeuglos durch den Benutzer getrennt werden, um den Adapter zwischenzuschalten. Bevorzugt ist der Stecker integral mit einem Gehäuse des Adapters ausgebildet, wodurch der Adapter nicht nur elektrisch, sondern auch mechanisch mit der Steuereinrichtung verbunden ist.

Erfindungsgemäß weist der Adapter einen Empfänger für Wellen bzw. Signale des weiteren Übertragungswegs auf. Erfindungsgemäß ist der Empfänger ein Funkempfänger, wobei der weitere Übertragungsweg eine drahtlose Funk-Übertragung der Bedienkommandos umfasst. Auf diese Weise kann eine komfortabel nutzbare drahtlose Fernbedienmöglichkeit nachgerüstet werden, beispielsweise mit einer speziellen Fernbedienung oder einem Mobilgerät, z.B. einem Smartphone, das durch ein entsprechendes Programm ("App") als Fernbedienung fungiert. Der Adapter kann dabei zur Übertragung gemäß dem WLAN-, Bluetooth- oder ZigBee-Protokoll eingerichtet sein. Neben derartigen standardisierten Protokollen können auch proprietäre Funkprotokolle eingesetzt werden. Es versteht sich, dass neben dem Empfänger auch ein Sender im Adapter vorgesehen sein kann, um eine bidirektionale Signal- bzw. Datenübertragung zu ermöglichen. Dieses ist in der Regel protokollbedingt auch dann erforderlich, wenn (Nutz-) Daten nur an den Adapter übertragen werden sollen.

Ein erfindungsgemäßes Möbel, insbesondere Bett, zeichnet sich durch einen derartigen Möbelantrieb mit einem Adapter aus. Es ergeben sich die im Zusammenhang mit dem Möbelantrieb genannten Vorteile.

Die Erfindung wird nachfolgend anhand von Ausführungsbeispielen mithilfe von Figuren näher erläutert. Die Figuren zeigen:
- Figur 1: eine schematische Darstellung eines Bettes mit einem Möbelantrieb nach dem Stand der Technik;
- Figur 2: eine schematische Darstellung eines Bettes mit einem Möbelantrieb gemäß einem ersten Ausführungsbeispiel der Erfindung; und
- Figur 3: eine schematische Darstellung eines Bettes mit einem Möbelantrieb gemäß einem zweiten Ausführungsbeispiel der Erfindung.

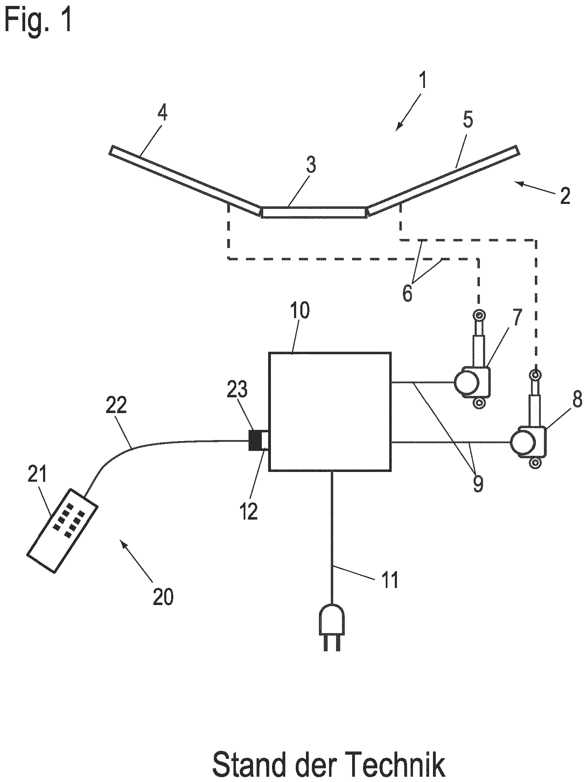

Figur 1 zeigt zunächst ein Bett 1 als Beispiel eines Möbels mit einem elektromotorischen Möbelantrieb gemäß dem Stand der Technik in einer schematischen Ansicht.

Das Bett 1 weist wenigstens ein Stützelement 2 zur Aufnahme einer hier nicht dargestellten Matratze auf. Das Bett 1 kann als ein Einzelbett für eine Person oder auch als Doppelbett für mehrere Personen ausgelegt sein. Das Stützelement 2 ist aus mehreren plattenförmigen Teilen oder aus einem Lattenrost gebildet und auf ein hier nicht dargestelltes Grundelement, z.B. ein Gestell mit Füßen, aufgelegt oder montiert.

Das Stützelement 2 weist im dargestellten Beispiel ein Rückenteil 4 und ein Beinteil 5 auf, welche relativ zu einem festen Mittelteil 3 oder relativ zu dem Grundelement beweglich gelagert angeordnet sind. Diese bewegliche Anordnung ist beispielsweise mittels eines so genannten hier nicht dargestellten Bewegungsbeschlags realisiert. Die Bewegung ist verschiebbar und/oder schwenkbar ausgebildet.

Das in diesem Beispiel gezeigte Bett 1 ist mit einem elektromotorischen Möbelantrieb ausgestattet. Das beweglich gelagerte Rückenteil 4 und das Beinteil 5 sind dabei jeweils über eine nur schematisch gezeigte mechanische Verbindung 6 mit einem elektromotorischen Verstellantrieb 7, 8 gekoppelt. So ist das Rückenteil 4 mit dem elektromotorischen Verstellantrieb 7 gekoppelt. Zur Bewegung bzw. Verstellung des Beinteils 5 ist der elektromotorische Verstellantrieb 8 vorgesehen.

Die elektromotorischen Verstellantriebe 7, 8 sind vorliegend als Linearantriebe ausgebildet. Die Linearantriebe weisen einen oder eine Anzahl Elektromotoren auf, wobei jedem der Elektromotoren in der Regel ein Drehzahlreduziergetriebe mit wenigstens einer Getriebestufe nachgeschaltet ist. Dem Drehzahlreduziergetriebe kann ein weiteres Getriebe, beispielsweise in Form eines Gewindespindelgetriebes, nachgeschaltet sein, welches aus der Drehbewegung des Motors eine Linearbewegung eines Abtriebsgliedes erzeugt. Das letzte Getriebeglied oder ein damit verbundenes weiteres Glied bildet das Abtriebsglied. Das Abtriebsglied des jeweiligen elektromotorischen Verstellantriebs steht mit dem jeweiligen Möbelbauteil (Rückenteil 4, Beinteil 5) oder alternativ mit einem mit dem Grundelement verbundenes Bauteil in Verbindung, so dass bei einem Betrieb des Elektromotors des jeweiligen Verstellantriebs 7, 8 die beweglichen Möbelbauteile 4, 5 relativ zueinander bzw. relativ zum Grundelement verstellt werden.

Die elektromotorischen Verstellantriebe 7, 8 sind zu ihrer Betätigung bzw. Ansteuerung elektrisch mit einer Steuereinrichtung 10 verbunden. Diese Verbindung kann z.B. als steckbare Kabelverbindung 9 ausgeführt sein. Die Steuereinrichtung 10 weist eine elektrische Versorgungseinheit auf, welche die elektrische Energie, z.B. aus einem Stromversorgungsnetz, für die elektromotorischen Verstellantriebe 7, 8 bereitstellt. Dazu ist die Steuereinrichtung 10 in diesem Beispiel über ein Netzkabel 11 mit einem Netzstecker mit einem Netzanschluss verbindbar. Der Netzstecker leitet über das Netzkabel 11 die eingangsseitige Netzspannung zu der elektrischen Versorgungseinheit der Steuereinrichtung 10, welche sekundärseitig eine Kleinspannung in Form einer Gleichspannung abgibt.

Alternativ hierzu ist der Steuereinrichtung 10 eine externe netzabhängige Spannungsversorgung mit Netzeingang und mit sekundärseitigem Kleinspannungsausgang vorgeschaltet, welche über die Leitung die Kleinspannung in Form einer Gleichspannung zuführt.

In einer alternativen Ausgestaltung ist die Steuereinrichtung 10 nicht oder nicht vollständig in einem separaten Gehäuse angeordnet, sondern ganz oder teilweise in einen der Verstellantriebe 7, 8 integriert. Dieser Verstellantrieb stellt dann einen Hauptantrieb dar, an den ggf. weitere Verstellantriebe angeschlossen werden können.

Bei dem in Figur 1 gezeigten Möbelantrieb ist zur Bedienung eine kabelgebundene Handsteuerung 20 mit einer Handbedieneinheit 21 vorhanden, die Bedienelemente z. B. in Form von Tasten aufweist. Eine Betätigung der Bedienelemente wird über das dargestellte Kabel 22 an die Steuereinrichtung 10 übertragen, die entsprechend der bedienten Elemente die Verstellantriebe 7, 8 ansteuert. Diese Ansteuerung kann bestimmten Einschränkungen unterliegen, beispielsweise können bestimmte Verstellantriebe 7, 8 oder bestimmte Verstellbereiche von einer Verstellung ausgenommen sein oder erst nach Freigabe, z. B. über ein Schlüsselschalter oder ein ähnliches übergeordnetes Element zugänglich sein. Zudem kann in den Verstellantrieben 7, 8 jeweils einer oder mehrere Endschalter angeordnet sein, die eine Bewegung über einen bzw. zwei definierte Endpunkte verhindern.

Zur Verbindung der Handbedieneinheit 21 mit der Steuereinrichtung 10 ist an der Steuereinrichtung 10 ein Handbedienanschluss 12, z.B. in Form einer Einbaubuchse, angeordnet. Das freie Ende des Kabels 22 ist mit einem Stecker 23 versehen, der in den Handbedienanschluss 12 eingesteckt wird.

Derartige Möbelantriebe mit Handsteuerung 20 durch eine kabelgebundene Handbedieneinheit 21 sind vielfältig im Markt vertreten, da sie zuverlässig bedienbar und kostengünstig herstellbar sind. Dabei sind Varianten vorhanden, bei denen ein Motorstrom der Verstellantriebe 7, 8 unmittelbar in der Handbedieneinheit 21 geschaltet wird, und Varianten, bei denen von der Handbedieneinheit 21 Steuersignale über das Kabel 22 übertragen werden, wobei die Motorströme über Schaltorgane (Relais oder Halbleiterschalter) in der Steuereinrichtung 10 geschaltet werden.

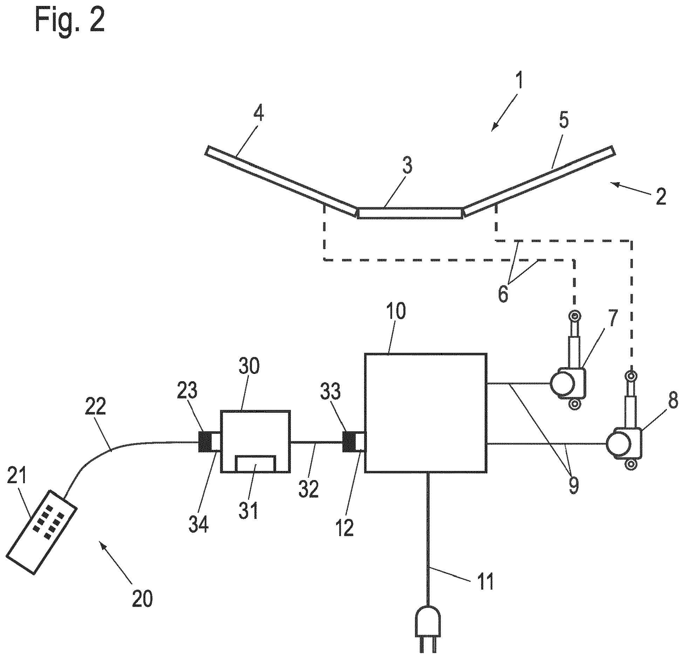

In der Figur 2 ist ein erstes Ausführungsbeispiel eines erfindungsgemäßen Möbelantriebs in gleicher Weise wie in Figur 1 und anhand des gleichen Bettes 1 als Beispiel eines Möbels dargestellt.

Der Möbelantrieb gemäß Figur 2 ist durch Nachrüsten des Möbelantriebs gemäß Figur 1 um einen Adapter 30 gebildet. Der Aufbau und die Funktion des Adapters 30 werden nachfolgend näher erläutert. Alle anderen Komponenten, insbesondere die Steuereinrichtung 10 und die Handsteuerung 20 sowie die Verstellantriebe 7, 8 sind bei beiden Beispielen gleich. Auf die entsprechende Beschreibung im Zusammenhang mit Figur 1 wird verwiesen.

Der Adapter 30 wird zwischen die Steuereinrichtung 10 und die Handsteuerung 20 eingeschleift und weist zu diesem Zweck seinerseits ein Kabel 32 und einen Stecker 33 auf, der kompatibel zum Stecker 23 der Handsteuerung 20 ist und in den Handbedienanschluss 12 der Steuereinrichtung 10 eingesteckt ist. Weiter weist der Adapter 30 einen Handbedienanschluss 34 auf, der kompatibel zum Handbedienanschluss 12 der Steuereinrichtung 10 ausgebildet ist. In diesen wird der Stecker 23 der Handsteuerung 20 eingesteckt.

Der Adapter 30 ist dabei dazu eingerichtet, sämtliche relevante Leiter oder Signale des Kabels 22 bzw. Kontakte des Steckers 23 an den Handbedienanschluss 12 der Steuereinrichtung 10 weiterzuleiten, so das die Funktionalität der Handsteuerung 20 unverändert gegeben ist.

Darüber hinaus weist der Adapter 30 einen Empfänger 31 auf, der vorliegend zum Empfang von Funksignalen 41 geeignet ist, die im dargestellten Beispiel von einem Mobilgerät 40 ausgesendet werden. Mithilfe des Empfängers 31 stellt der Adapter 30 einen weiteren Übertragungsweg für Bedienkommandos bereit, zusätzlich zum Übertragungsweg, der über die Handsteuerung 20 etabliert ist.

Vom Empfänger 31 empfangene Funksignale 41 werden innerhalb des Adapter 30 ausgewertet und so umgesetzt, dass am Stecker 33 elektrische Signale ausgegeben oder elektrische Verbindungen bereitgestellt werden, die dem betätigen eines Bedienelements der Handbedieneinheit 21 entsprechen und somit von der Steuereinrichtung 10 als Bedienkommandos erkannt werden, beispielsweise zur Ansteuerung der Verstellantriebe 7, 8.

Durch den Adapter 30 kann ein bereits bestehender Möbelantrieb auf einfache Weise um eine drahtlose Bedienmöglichkeit ergänzt werden, ohne dass es einer Modifikation an der Steuereinrichtung 10 bedarf und ohne dass die Möglichkeit zur Bedienung über die Handsteuerung 20 entfällt. Für die Steuereinrichtung 10 ist das Zwischenschalten des Adapter 30 insofern transparent, als dass von der Steuereinrichtung 10 aus nicht erkennbar ist, ob ein Bedienkommando von der Handsteuerung 20 oder der Steuerung über das Mobilgerät 40 stammt.

Falls bei dem Möbelantrieb eine unmittelbare Schaltung der Motorströme der Verstellantriebe 7, 8 in der Handbedieneinheit 21 erfolgt, sind im Adapter 30 entsprechend Schaltorgane vorhanden, die ebenfalls in der Lage sind, den Motorstrom unmittelbar zu schalten. Falls ein Schalten der Motorströme innerhalb der Steuereinrichtung 10 vorgesehen ist, werden im Adapter 30 entsprechende Signale - analog, digital und/oder über ein Busprotokoll - erzeugt, die dann zum Schalten der Motorströme über die Schaltorgane in der Steuereinrichtung 10 führen.

Die Bedienung des Möbelantriebs über die Handsteuerung 20 bzw. über das Mobilgerät 40 kann dabei vom Adapter 30 gleichwertig behandelt werden. Es ist jedoch auch möglich, dass der Adapter 30 eine Priorisierung der Signale vornimmt, dahingehend, dass entweder die Handsteuerung 20 oder die Steuerung über das Mobilgerät 40 mit Priorität behandelt wird. Auch ist es denkbar, dass über das Mobilgerät 40 eingestellt werden kann, dass nur bestimmte Bedienkommandos der Handbedieneinheit 21 weitergeleitet werden, wohingegen andere Bedienkommandos nicht weiter geleitet werden. Auf diese Weise kann bei einem Einsatz des Möbelantriebs bei einem Pflege- oder Patientenbett die Nutzung bestimmter der Verstellantriebe 7,8 für den Patienten bzw. die pflegebedürftige Person unterbunden werden.

Das Mobilgerät 40 kann insbesondere ein handelsübliches Mobiltelefon ("Smartphone") oder ein Tablet-Computer sein. Bevorzugt ist eine Software ("App") für die Funktion der Steuerung des Möbelantriebs auf dem Mobilgerät 40 installiert. Bedienkommandos an die Verstellantriebe 7, 8 werden dann über einen drahtlosen weiteren Übertragungsweg durch die Funksignale 41 von dem als Handbedienung genutzten Mobilgerät 40 an die Steuereinrichtung 10 gesendet. Der drahtlose weitere Übertragungsweg kann beispielsweise auf einem standardisierten WLAN (Wireless Lokal Area Network)- oder Bluetooth- oder ZigBee-Übertragungsweg basieren. Es können alternativ auch proprietäre Übertragungswege bzw. Protokolle für die Funksignale 41 vorgesehen sein. Es versteht sich, dass neben dem Empfänger 31 auch ein Sender im Adapter vorgesehen sein kann, um eine bidirektionale Signal- bzw. Datenübertragung zu ermöglichen. Dieses ist in der Regel protokollbedingt auch dann erforderlich, wenn (Nutz-) Daten nur von dem Mobilgerät 40 an den Adapter 30 übertragen werden.

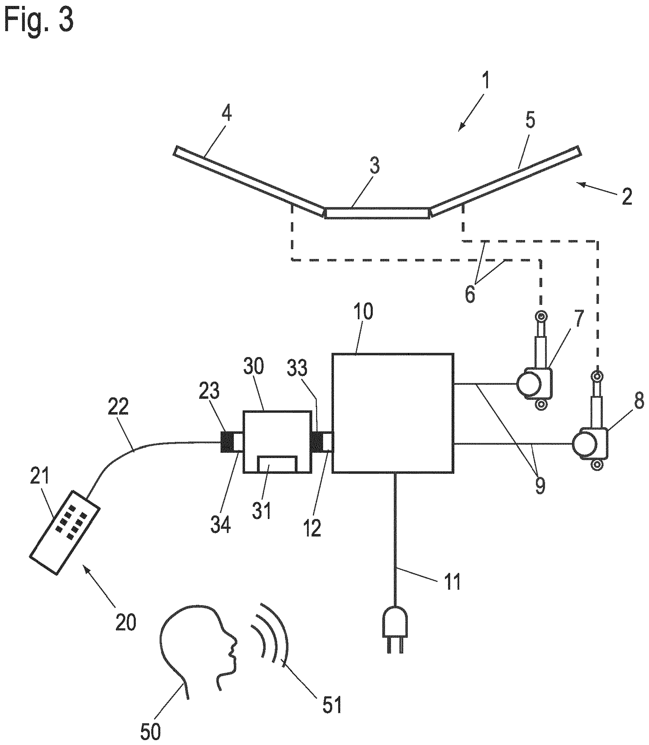

In der Figur 3 ist ein weiteres Ausführungsbeispiel eines erfindungsgemäßen Möbelantriebs dargestellt, wiederum am gleichen Bett 1 wie in dem vorhergehenden Beispiel und basierend auf einem vergleichbaren Möbelantrieb.

Gleiche Bezugszeichen kennzeichnen in diesem Ausführungsbeispiel gleiche oder gleiche wirkende Elemente wie in den vorhergehenden Beispielen. Bezüglich des Grundaufbaus des Möbelantriebs wird auf die Beschreibung der vorhergehenden Beispiele verwiesen.

Der erfindungsgemäße Unterschied zum Ausführungsbeispiel der Figur 2 liegt in der Verbindung zwischen dem Adapter 30 und der Steuereinrichtung 10. Beim Beispiel der Figur 3 ist der Stecker 33, mit dem der Adapter 30 in den Handbedienanschluss 12 der Steuereinrichtung 10 eingesteckt ist, nicht über ein Kabel mit dem Adapter 30 verbunden, sondern integral an dessen Gehäuse ausgebildet. Auf diese Weise benötigt der Adapter 30 keine separate mechanische Befestigung, sondern wird über den Stecker 33 elektrisch und mechanisch mit der Steuereinrichtung 10 gekoppelt.

Nicht Teil der Erfindung und rein beispielhaft ist gegenüber dem Ausführungsbeispiel der Figur 2 beim Adapter 30 der Figur 3 ein Mikrofon als Empfänger 31 vorgesehen, mit dessen Hilfe eine Sprachsteuerung für den Möbelantrieb umgesetzt ist. Gesprochene Bedienkommandos eines Benutzers 50 werden als Schallwellen 51 an den Adapter 30 übertragen, dort vom Mikrofon empfangen und in elektrische Signale gewandelt. Diese werden in einer Sprachanalyseeinrichtung ausgewertet und in Steuersignale für die Steuereinrichtung umgesetzt, bzw. direkt zum Schalten der Motorströme über Schaltorgane eingesetzt.

Zur Auswertung der elektrischen Signale des Mikrofons weist der Adapter 30 beispielsweise einen Mikrocontroller, einen digitalen Signalprozessor (DSP) sowie digitale und/oder analoge Filter auf, die Teil einer lokalen Sprachanalyseeinrichtung sind. Es lassen sich so beispielsweise gesprochene Bedienkommandos wie "Beine absenken" oder "Kopf anheben" erkennen und in eine Bewegung des entsprechenden Verstellantriebs umsetzen.

Es kann zudem vorgesehen sein, dass sicherheitsrelevante Sprachinformationen erkannt werden, die zu einer Notabschaltung der Verstellantriebe 7, 8 führen. Diese Notabschaltefunktion kann auch dann greifen, wenn ein Bedienkommando zur Aktivierung einer der Verstellantriebe über die Handsteuerung 20 abgesetzt wird.

Beispielsweise kann vorgesehen sein, dass die lokale Sprachanalyseeinrichtung Anweisungen wie "Stopp" oder "Halt" oder ähnliche Ausrufe erkennt und dann Signale an die Steuereinrichtung 10 leitet, die zu einem sofortigen Anhalten (oder sogar einer kurzzeitige Bewegungsrichtungsumkehr) des aktuell bewegten Verstellantriebs führen, unabhängig davon, ob die Bewegung aufgrund eines Sprachkommandos oder der Handsteuerung 20 erfolgt ist.

In einer alternativen Ausgestaltung des Adapters 30 kann vorgesehen sein, dass eine Auswertung der elektrischen Signale des Mikrofons teilweise in dem Adapter 30 selbst und ggf. zusätzlich in einer externen Sprachanalyseeinrichtung erfolgt, die z.B. als sogenannter Cloud-Dienst verfügbar ist.

Um eine externe Sprachanalyseeinrichtung einsetzen zu können, ist der Adapter 30 dann drahtgebunden, z.B. über ein Ethernet-Kabel, oder auch drahtlos mit einem Netzwerk verbunden, dass Zugang zum Internet ermöglicht.

Die Analyse der vom Mikrofon ausgegebenen Signale teilt sich dann in zwei Zweige auf, von denen einer die lokale Sprachanalyseeinrichtung umfasst und der andere die externe Sprachanalyseeinrichtung.

Im Betrieb des Adapters 30 werden elektrische Signale des Mikrofons digitalisiert die externe Sprachanalyseeinrichtung gesendet. Die externe Sprachanalyseeinrichtung analysiert die Daten und extrahiert einen Sprachinhalt. Ein erkannter Sprachinhalt wird ebenfalls digital, z.B. in Form von Text zurückübertragen. Der Text wird dann im Adapter 30 ausgewertet und es werden aufgefundene Bedienkommandos umgesetzt. Durch die leistungsstarke externe Sprachanalyse wird eine noch komfortablere Möglichkeit zur Steuerung der Verstellantriebe 7, 8 und ggf. mit der Steuereinrichtung 10 verbundene Komponenten ermöglicht.

Als komfortable Sprachsteuerung ist dabei zu verstehen, dass die Sprachsteuerung auf gesprochene Worte flexibel reagiert und ggf. im Hinblick auf den nutzbaren Wortschatz trainierbar und/oder erweiterbar ist. Diese Aufgabe bedarf einer hohen Rechenleistung und eines komplexen Sprachanalysesystems. Vorteilhaft nutzt der Adapter 30 zu diesem Zweck vorhandene externe Sprachanalyseeinrichtungen, die über das Internet kontaktierbar sind. Solche Dienste werden von verschiedenen Internetanbietern als sogenannte Cloud-Dienste bereitgestellt. Es ist dabei in der Regel eine standardisierte Netzwerkschnittstellentechnologie in Form eines API (Application Programming Interface) oder einer standardisierten Netzanfrage z. B. über das REST-Protokoll einsetzbar.

Typische gesprochene Kommandos können die Form "Rückenlehne hochfahren" oder "Beinunterstützung absenken" oder "Leseposition einnehmen" oder ähnlich aufweisen. Auch Kommandos der Form "diese Position unter dem Namen ... abspeichern" sind bei Nutzung einer leistungsfähigen Sprachanalyse denkbar. Weiter können auch werksvoreingestellte Kommandos wie "fahre in die TV Position" oder "fahre zu Zero Gravity" oder "fahre in die Liegeposition" vorgesehen sein, die mit fest voreingestellten Verstellpositionen für das Kopf-und/oder das Fußteil verknüpft sind. Die zuvor genannten Kommandos sind dabei rein beispielhafter Natur und können beliebig an die Funktionsmöglichkeiten des Bettes 1 bzw. des Möbels mit dem Möbelantrieb angepasst werden. Gegebenenfalls ist vorgesehen, zunächst ein Schlüsselwort voranzustellen, das von der lokalen Sprachanalyseeinrichtung im Adapter 30 erkannt wird und eine Weitergabe der aufgenommenen Sprache an die externe Sprachanalyseeinrichtung aktiviert, so dass aufgenommene Signale nur dann über das Internet gesendet werden, wenn diese auch den Möbelantrieb betreffen.

Auch bei einer derartigen Kombination von lokaler und externer Sprachanalyse kann vorgesehen sein, dass die immer verfügbare lokale Sprachanalyseeinrichtung insbesondere der Auswertung von sicherheitsrelevanten Sprachinformationen dient.

Die Sprachsteuerung ist durch die externe Sprachanalyse komfortabel, sie ist dennoch sicher, da die auf der externen Auswertung beruhenden Kommandos jederzeit durch die Notfallabschaltung durch die lokale Sprachanalyseeinrichtung überschrieben werden können.

Die lokale Sprachanalyseeinrichtung kann sich dabei eines Mikrocontrollers, eines DSP (Digital Signal Processor) und/oder eines FPGA (Field Programmable Gate Array) bedienen, wobei die genannten Komponenten ggf. in Form eines SOC (System On Chip) integriert sind. Mit relativ geringem Hardwareaufwand kann auf diese Weise zumindest eine Analyse von Spracheingaben beschränkt auf einige wenige Schüsselwörter erfolgen. Das genannte Schlüsselwort "Stopp" beispielsweise ist anhand der charakteristischen Phonetik leicht und sicher identifizierbar. Neben expliziten Wörtern können auch in Zusammenhang mit Gefährdungssituationen verwendete Laute erkannt werden und als Zeichen, die Verstellantriebe 7, 8 zu stoppen oder rückwärts laufen zu lassen, interpretiert werden. Es wird so ein weiter erhöhtes Sicherheitsniveau erreicht.

Insbesondere wenn nur wenige Schlüsselwörter in der lokalen Sprachanalyseeinrichtung erkannt werden müssen, kann vorteilhaft auch ein Mikrofon eingesetzt werden, in das die lokale Sprachanalyseeinrichtung integriert ist. Der Bauteileaufwand bei dem Adapter 30 kann so minimiert werden.

In einer weiteren alternativen Ausgestaltung der Figur 3 kann eine Auswertung nicht von Sprache, sondern von sonstigen Schallereignissen vorgesehen sein, z.B. von einzelnen Klatschereignissen oder verschiedenen, sich im Rhythmus unterscheidenden Klatsch-Folge.

Nicht erfindungsgemäß und rein beispielhaft kann bei dem Adapter 30 ein optischer Empfänger 31 vorhanden sein, so dass ein auf optischen Signalen basierender weiterer Übertragungsweg bereitgestellt wird. So kann auf einfache Weise eine z.B. mit Infrarotlicht arbeitende Fernbedienung zur Steuerung des Möbelantriebs nachgerüstet werden.

Es ist rein beispielhaft auch möglich, durch den Adapter 30 eine Gestensteuerung nachzurüsten. In dem Fall weist der Adapter 30 einen oder mehrere optische Sensoren, z.B. Kameras, auf, mit denen eine Erkennung der Bewegung eines Körperteils hinsichtlich Geschwindigkeit und Richtung erfolgt. Aus den erfassten Gesten werden Bedienkommandos für den Möbelantrieb abgeleitet.

### Bezugszeichen

- 1: Bett
- 2: Stützelement
- 3: Mittelteil
- 4: Rückenteil
- 5: Beinteil
- 6: Verbindung
- 7, 8: Verstellantrieb
- 9: Verbindungskabel

- 10: Steuereinrichtung
- 11: Netzkabel
- 12: Handbedienanschluss

- 20: Handsteuerung
- 21: Handbedieneinheit
- 22: Kabel
- 23: Stecker

- 30: Adapter
- 31: Empfänger
- 32: Kabel
- 33: Stecker
- 34: Handbedienanschluss

- 40: Mobilgerät
- 41: Funksignale

- 50: Bedienperson
- 51: Schallwellen

## Patentansprüche

1. Möbelantrieb mit einem Adapter (30), einer Steuereinrichtung (10) und mindestens einem elektromotorischen Verstellantrieb (7, 8) sowie einer Handsteuerung (20) mit einer Handbedieneinheit (21), die über ein Kabel (22) mit der Steuereinrichtung (10) verbunden ist zur Betätigung des mindestens einen Verstellantriebs (7, 8) über einen Übertragungsweg für Bedienkommandos, und
wobei der Adapter (30) an die Steuereinrichtung (10) angeschlossen ist, durch den ein weiterer Übertragungsweg für Bedienkommandos bereitgestellt wird, und wobei der Adapter (30) zwischen der Steuereinrichtung (10) und der Handbedieneinheit (21) angeordnet ist, und wobei der Adapter (30) einen Empfänger (31) für Wellen bzw. Signale des weiteren Übertragungswegs aufweist, und wobei der Empfänger (31) ein Funkempfänger ist und der weitere Übertragungsweg
eine drahtlose Funk-Übertragung der Bedienkommandos umfasst, und wobei der Adapter (30) einen Stecker (33) zur Verbindung mit der Steuereinrichtung (10) und einen Handbedienanschluss (34) zur Verbindung mit der Handbedieneinheit (21) aufweist.

2. Möbelantrieb nach Anspruch 1, bei dem der der Adapter (30) zur Übertragung gemäß dem WLAN-, Bluetooth- oder ZigBee-Protokoll eingerichtet ist.

3. Möbelantrieb nach Anspruch 1 oder 2, bei dem der Stecker (33) integral mit einem Gehäuse des Adapters (30) ausgebildet ist.

4. Möbel, insbesondere Bett (1), aufweisend einen Möbelantrieb gemäß einem der Ansprüche 1 bis 3.

## Claims

1. Furniture drive having an adapter (30), a control device (10) and at least one electromotive adjustment drive (7, 8) as well as a manual control (20) with a manual operating unit (21), which is connected to the control device (10) via a cable (22) for operating the at least one adjustment drive (7, 8) via a transmission path for operating commands, and wherein the adapter (30) is connected to the control device (10), by means of which a further transmission path for operating commands is provided, and wherein the adapter (30) is arranged between the control device (10) and the manual operating unit (21), and wherein the adapter (30) comprises a receiver (31) for waves or signals of the further transmission path, and wherein the receiver (31) is a radio receiver and the further transmission path comprises a wireless radio transmission of the operating commands, and wherein the adapter (30) comprises a plug (33) for connection to the control device (10) and a manual operating connection (34) for connection to the manual operating unit (21).

2. Furniture drive according to claim 1, in which the adapter (30) is adapted for transmission according to the WLAN, Bluetooth or ZigBee protocol.

3. Furniture drive according to claim 1 or 2, in which the plug (33) is integrally formed with a housing of the adapter (30).

4. Piece of furniture, in particular bed (1), comprising a furniture drive according to one of claims 1 to 3.

## Revendications

1. Entraînement de meuble doté d'un adaptateur (30), un dispositif de commande (10) et au moins un actionneur à moteur électrique (7, 8) ainsi qu'une commande manuelle (20) avec une unité de commande manuelle (21) reliée au dispositif de commande (10) par un câble (22) pour l'actionnement d'au moins un actionneur à moteur électrique (7, 8) par une voie de transmission des commandes de fonctionnement, et l'adaptateur (30) étant raccordé au dispositif de commande (10), fournissant une autre voie de transmission des commandes de fonctionnement, et l'adapteur (30) étant disposé entre le dispositif de commande (10) et l'unité de commande manuelle (21) et l'adapteur (30) présentant un récepteur (31) des ondes ou signaux de l'autre voie de transmission, et le récepteur (31) étant un récepteur radio et l'autre voie de transmission comprenant une transmission radio sans fil des commandes de fonctionnement, et l'adaptateur (30) présentant un connecteur (33) pour la connexion au dispositif de commande (10) et un raccord de commande manuelle (34) pour la connexion à l'unité de commande manuelle (21).

2. Entraînement de meuble selon la revendication 1, dans lequel l'adaptateur (30) est agencé pour la transmission conformément au protocole Wi-Fi, Bluetooth ou ZigBee.

3. Entraînement de meuble selon la revendication 1 ou 2, dans lequel est conçu le connecteur (33) intégral avec un boîtier de l'adaptateur (30).

4. Meuble, en particulier un lit (1), présentant un entraînement de meuble selon l'une des revendications de 1 à 3.
